# EUROPEAN PATENT SPECIFICATION

(11) **EP 3 188 493 B1**
(45) Date of publication and mention of the grant of the patent: **23.10.2019**
(21) Application number: 15896168.0
(22) Date of filing: 11.11.2015
(51) Int. Cl.: H04N 21/858, H04L 29/06, H04L 29/08

(54) **METHOD AND DEVICE FOR GUIDING VIDEO TRAFFIC, AND ELECTRONIC DEVICE**
VERFAHREN UND VORRICHTUNG ZUR LEITUNG VON VIDEOVERKEHR UND ELEKTRONISCHE VORRICHTUNG
PROCÉDÉ ET DISPOSITIF DE GUIDAGE D'UN TRAFIC VIDÉO, ET DISPOSITIF ÉLECTRONIQUE

(30) Priority: 26.06.2015 CN 201510359794
(43) Date of publication of application: 05.07.2017
(73) Proprietor: Wangsu Science & Technology Co., Ltd., Shanghai 200030 (CN)
(72) Inventor: WU, Xin, Shanghai 201822 (CN)
(74) Representative: Hanna Moore + Curley
(86) International application number: PCT/CN2015/094270
(87) International publication number: WO 2016/206283

(56) References cited:
- WO-A1-2014/094606
- WO-A1-2015/062416
- CN-A- 103 916 405
- CN-A- 103 916 405
- CN-A- 103 944 906
- CN-A- 103 974 141
- CN-A- 104 954 894
- US-A1- 2012 311 167
- US-A1- 2013 166 906

## Description

### TECHNICAL FIELD

The present disclosure relates to the technical field of communications and, more particularly, relates to a video stream redirecting method, device, and an electronic apparatus.

### BACKGROUND TECHNOLOGIES

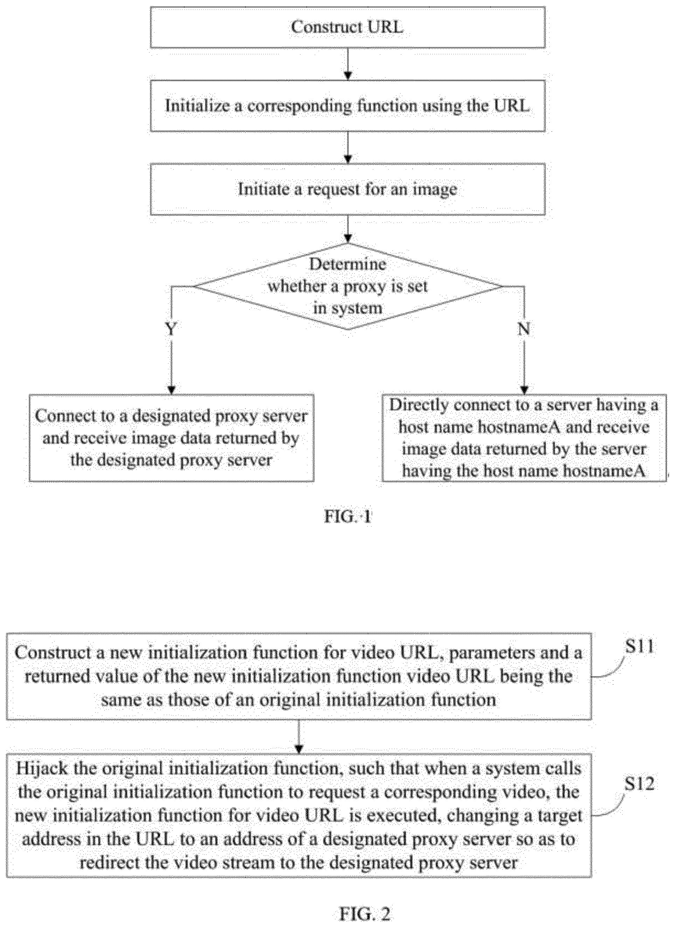

In existing methods, redirecting a stream to a designated proxy server is usually realized through the process steps shown in FIG. 1. Assume an image is requested, the corresponding URL of the image is http://hostnameA.com/icon.jpg, and the stream of the request for the image needs to be redirected to the designated proxy server, which, for example, has an IP address of 127.0.2.1, then the method for redirecting the stream includes: constructing the URL; initializing a corresponding function using the URL; initiating the request for the image; determining whether a proxy is set in the system; if yes, directly connecting to the designated proxy server and receiving image data returned by the designated proxy server; and if no, directly connecting to the server having a host name hostnameA and receiving the image data returned by the server having the host name hostnameA.

However, in a video requesting process in the UIWebView widget, the step of determining whether a proxy is set in the system cannot be performed. That is, the stream cannot be redirected according to the above-described stream redirecting method. Accordingly, existing stream redirecting methods are not suitable for redirecting video stream in UIWebView.

The document WO2015/062416 A1 discloses a method for loading a webpage including generating and sending by a browser, a webpage request; intercepting by a retrieving module on a client device the webpage request.
The document CN 103916405 A discloses a method for guiding a flow of TCP/UDP of an App comprising intercepting all functions of a native Socket, guiding the flow to a remote proxy server, sending data packets to a source IP address requested by the App, the remote proxy server mainly forwards the data packets sent by the App.

### SUMMARY

In view of the above defects in the existing technologies, the present disclosure provides a video stream redirecting method and device to solve the problems in the existing technologies which are not able to redirect the stream generated during video playback in UIWebView. To achieve the above and other related objects, the present disclosure provides a video stream redirecting method according to claim 1.

To achieve the above and other related objects, the present disclosure also provides a video stream redirecting device according to claim 6.

As described above, a video stream redirecting method, device, and an electronic apparatus according to the present disclosure hijacks an original initialization function by constructing a new initialization function for video URL and exchanging addresses of the original initialization function and the new initialization function for video URL. That is, when the system calls the original initialization function to request a corresponding video, the new initialization function for video URL is executed to redirect the video stream to a designated proxy server, and thus realizing the stream redirecting of video requests for the UIWebView widget in iOS.

### BRIEF DESCRIPTION OF THE FIGURES

FIG. 1 shows a process flow diagram of an example of stream redirecting according to existing technologies.
FIG. 2 shows a process flow diagram of a video stream redirecting method according to an embodiment of the present disclosure.
FIG. 3 shows a process flow diagram of a video stream redirecting method according to another embodiment of the present disclosure.
FIG. 4 shows a block diagram of a video stream redirecting device according to an embodiment of the present disclosure.
FIG. 5 shows a schematic application diagram of an electronic apparatus and a server according to an embodiment of the present disclosure.

### Explanation of reference numerals

- 1, 21: Video stream redirecting device
- 11: Function construction module
- 12: Stream redirecting module
- 2: Electronic apparatus
- 3: Server
- S11-S12, S21-S26: Processes

### DETAILED DESCRIPTION OF EMBODIMENTS

Modes of implementing the disclosure will be described below through specific embodiments. One of ordinary skill in the art can easily understand other advantages and effects of the present disclosure based on the disclosure of the present specification. The present disclosure can also be implemented or applied through other different modes. It is to be noted that the following embodiments and the features in the embodiments can be combined as long as they do not conflict with each other. It is to be noted that the drawings provided in the following embodiments merely schematically illustrate basic concept of the present disclosure. Each drawing only shows components relevant to the present disclosure, but does not show the number, shapes, and sizes of the components during actual implementation. During the actual implementation, the configuration, number, and dimensions of respective components can be changed as needed, and the arrangement of the components may be more complicated.

FIG. 2 shows a process flow of video stream redirecting method according to an embodiment of the present disclosure. The method can be implemented, for example, in the UIWebView widget of the iOS system, and includes:
S11: constructing a new initialization function for video URL. Parameters and a returned value of the new initialization function for video URL are the same as those of an original initialization function.

For example, a new initialization method, hooklnitWithURL, can be constructed in a newly-defined AVUrlAsset class. The parameters and returned value of this method are kept the same as those of the original initialization method, InitWithURL, in the AVUrlAsset class.

S12: hijacking the original initialization function, such that when a system calls the original initialization function to request a corresponding video, the new initialization function for video URL is executed, changing a target address in the URL to an address of a designated proxy server so as to redirect the video stream to the designated proxy server. That is, before playing the video link using the UIWebView widget, the iOS system calls InitWithUrl in the AVUrlAsset class to perform initialization, at which time the constructed new method, hooklnitWithURL, will be called but the original initialization method will not be called. As such, the video stream can be redirected to the designated proxy server.

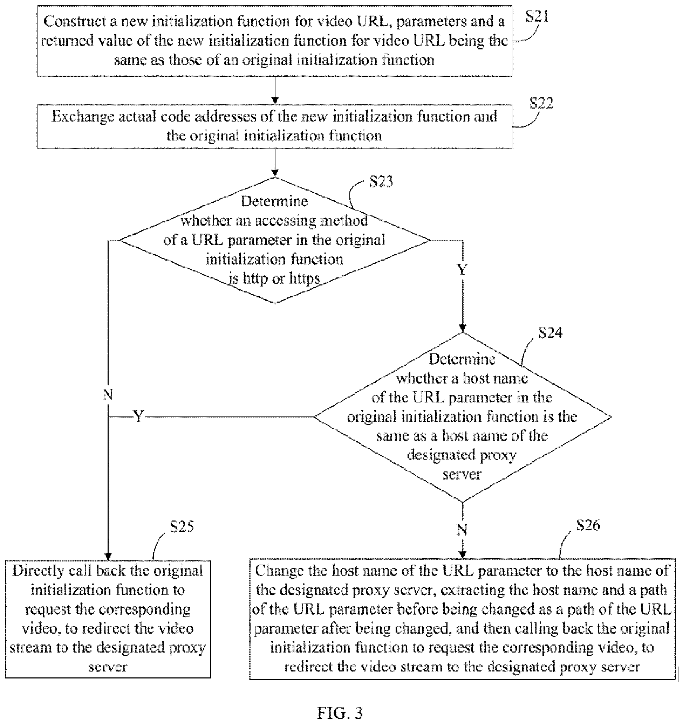

Further, FIG. 3 shows a process flow of a video stream redirecting method in UIWebView according to another embodiment of the present disclosure. The method includes:
S21: constructing a new initialization function for video URL. Parameters and a returned value of the new initialization function for video URL are the same as those of an original initialization function. The process in S21 is the same as the process in S11 in the embodiment shown in FIG. 2.

Further, the step of hijacking the original initialization function in S12 in the embodiment shown in FIG. 2 may include:
S22: exchanging actual code addresses of the new initialization function for video URL and the original initialization function, such that when the system calls the original initialization function to request the corresponding video, the new initialization function for video URL is executed. That is, actual code addresses of the newly-constructed initialization function and the original initialization function are obtained, respectively. After the exchanging, realization of InitWithURL will be executed when hooklnitWithURL is called, while realization of hooklnitWithURL will be executed when InitWithURL is called.

Further, in S12 in the embodiment shown in FIG. 2, executing the new initialization function for video URL when the system calls the original initialization function to request the corresponding video so as to redirect the video stream to the designated proxy server specifically includes:
S23: determining whether an accessing mode of a URL parameter in the original initialization function is http or https. If so, S24 is executed. If not, S25 is executed. That is, in this embodiment, the video stream redirecting may be performed only on accesses having an http or https accessing mode.
S24: determining whether a host name of the URL parameter in the original initialization function is the same as a host name of the designated proxy server. If so, S25 is executed. If not, S26 is executed.
S25: directly calling back the original initialization function to request the corresponding video, to redirect the video stream to the designated proxy server.
S26: changing the host name of the URL parameter to the host name of the designated proxy server, extracting the host name and a path of the URL parameter before being changed as a path of the URL parameter after being changed, and then calling back the original initialization function to request the corresponding video, to redirect the video stream to the designated proxy server.

Further, before determining whether the host name of the URL parameter in the original initialization function is the same as the host name of the designated proxy server, it is determined whether the accessing mode of the URL parameter in the original initialization function is http or https. If not, the original initialization function is called back directly to request the corresponding video. If so, determining whether the host name of the URL function in the original initialization function is the same as the host name of the designated proxy server is performed.

For example, in a specific application, assume the URL of a video request is: http://hostnameA.com/video, and the address of the designated proxy server is: 127.0.0.1:8123, then when the iOS system initializes an AVUrlAsset object, the newly-constructed initialization function is executed by hijacking the original initialization function. That is, the following is performed:
Because the accessing mode of the URL is http, it is further determined whether the host name of the URL parameter is the same as the host name of the designated proxy server.

In this application example, the host name of the URL parameter is different from the host name of the designated proxy server. Thus, the host name of the URL is changed to 127.0.0.1:8123, and the path is changed to hostnameA.com/video. The new URL, http://127.0.0.1:8123/hostnameA.com/video, is formed. The original initialization function is then called back using the changed URL as a parameter to request the corresponding video, to redirect the video stream to the designated proxy server 127.0.0.1:8123.

The present disclosure is explained with respect to the video stream in the iOS system. One of ordinary skill in the art should understand that, based on similar inventive concept, adaptive parameter modifications can be performed on another system such as the android system, and the purpose of redirecting videos can also be achieved. It should also fall in the scope of protection of the present disclosure.

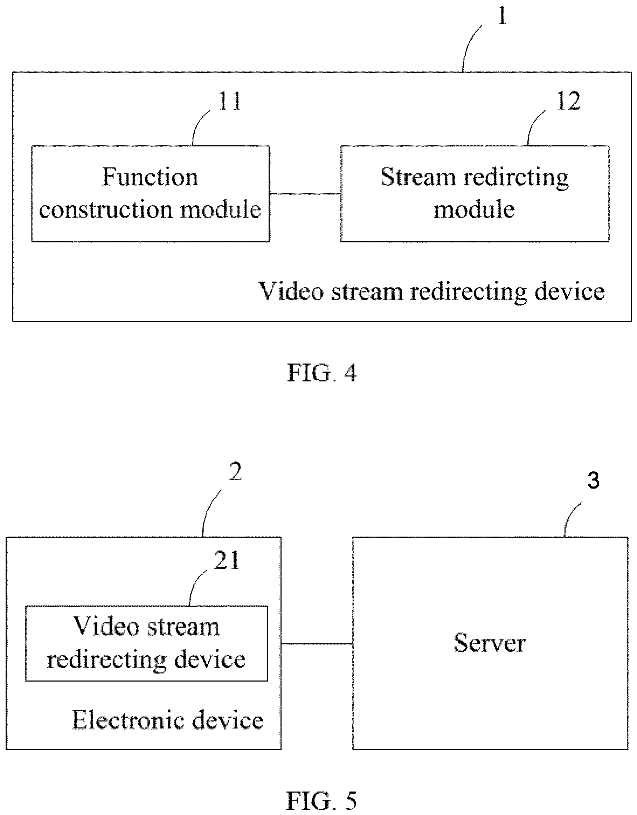

FIG. 4 shows a block diagram of a video stream redirecting device according to an embodiment of the present disclosure. The video stream redirecting device can be implemented, for example, in an electronic apparatus having the iOS system. The video stream redirecting device 1 includes a function construction module 11 and a stream redirecting module 12.

The function construction module 11 is configured to construct a new initialization function for video URL. Parameters and a returned value of the new initialization function for video URL are the same as those of an original initialization function.

The stream redirecting module 12 is configured to hijack the original initialization function, such that when a system calls the original initialization function to request a corresponding video, the new initialization function for video URL is executed, changing a target address in the URL to an address of a designated proxy server so as to redirect the video stream to the designated proxy server.

Further, in another embodiment, hijacking the original initialization function by the stream redirecting module 12 includes exchanging actual code addresses of the new initialization function for video URL and the original initialization function, such that when the system calls the original initialization function to request the corresponding video, the new initialization function for video URL is executed.

Further, in another embodiment, executing the new initialization function for video URL by the stream redirecting module 12 to redirect the video stream to the designated proxy server includes: determining whether a host name of a URL parameter in the original initialization function is the same as a host name of the designated proxy server; if so, directly calling back the original initialization function to request the corresponding video; and if not, changing the host name of the URL parameter to the host name of the designated proxy server, extracting the host name and a path of the URL parameter before being changed as a path of the URL parameter after being changed, and then calling back the original initialization function to request the corresponding video, to redirect the video stream to the designated proxy server. Further, in another embodiment, the stream redirecting module 12 is further configured to, before determining whether the host name of the URL parameter in the original initialization function is the same as the host name of the designated proxy server, determine whether an accessing mode of the URL parameter in the original initialization function is http or https; if not, then directly call back the original initialization function to request the corresponding video; and if so, then perform determining whether the host name of the URL parameter in the original initialization function is the same as the host name of the designated proxy server.

The application principle and the technical features of the video stream redirecting device 1 correspond to the video stream redirecting methods shown in FIG. 2 and FIG. 3, and thus detailed description of examples thereof is not repeated here.

FIG. 5 shows a schematic application diagram of an electronic apparatus and a server according to an embodiment of the present disclosure. A system of the electronic apparatus 2 may be, for example, the iOS system. The electronic apparatus includes a video stream redirecting device 21 to redirect a received video request stream to the server 3. When receiving the video request sent by the electronic apparatus 2, the server 3 returns a corresponding video to the electronic apparatus 2. The structure and application principle of the video stream redirecting device 21 are the same as those of the video stream redirecting device 1 shown in FIG. 4. In some embodiments, the electronic apparatus is a smart phone or a tablet.

In summary, a video stream redirecting method, device, and an electronic apparatus according to the present disclosure hijacks an original initialization function by constructing a new initialization function for video URL and exchanging addresses of the original initialization function and the new initialization function for video URL. That is, when the system calls the original initialization function to request a corresponding video, the new initialization function for video URL is executed to redirect the video stream to a designated proxy server, and thus realizing the stream redirecting of video requests for the UIWebView widget in iOS. Therefore, the present disclosure overcomes various defects in the existing technologies, and thus has a high value in industrial applications.

The above-described embodiments are merely examples for explaining the principles and effects of the present disclosure, but not to limit the present disclosure. Any person familiar with the technology can modify or change the above-described embodiments. Therefore, any equivalent modification and change accomplished by a person of ordinary skill in the art should be covered by the claims set forth below.

## Claims

1. A video stream redirecting method for the UIWebView widget of the operating system of an electronic apparatus (2), comprising:
constructing, by a function construction module (11), a new initialization function, hookInitWithURL, of a video URL, wherein new URL parameters and a returned value of the new initialization function of the video URL are the same as original URL parameters and a returned value of an original initialization function, InitWithURL, of the video URL, and the new URL parameters and the original URL parameters both comprise accessing mode, host name and path; and
hijacking, by a stream redirecting module (12), the original initialization function, such that when the operating system calls the original initialization function to request a corresponding video, the new initialization function of the video URL is executed, changing a target address in the video URL to an address of a designated proxy server (3), to redirect the video stream request of the corresponding video to the designated proxy server and obtaining, by the electronic apparatus (2), the corresponding video from the designated proxy server.

2. The video stream redirecting method according to claim 1, wherein hijacking, by the stream redirecting module, the original initialization function includes:
exchanging, by the stream redirecting module, actual code addresses of the new initialization function of the video URL and the original initialization function, such that when the operating system calls the original initialization function to request the corresponding video, the new initialization function of the video URL is executed.

3. The video stream redirecting method according to claim 1 or 2, wherein the new initialization function of the video URL includes an AVUrlAsset class initialization function.

4. The video stream redirecting method according to claim 1, wherein executing the new initialization function of the video URL to redirect the video stream request to the designated proxy server includes:
determining, by the stream redirecting module, whether a host name of an original URL parameter in the original initialization function is the same as the host name of the designated proxy server;
if so, directly calling, by the stream redirecting module, the original initialization function to request the corresponding video, to redirect the video stream request to the designated proxy server; and
if not, changing, by the stream redirecting module, the host name of the URL parameter to the host name of the designated proxy server, extracting the host name and a path of the original URL parameter as a path of the new URL parameter, and then calling the original initialization function to request the corresponding video, to redirect the video stream request to the designated proxy server.

5. The video stream redirecting method according to claim 4, further comprising, before determining whether the host name of the original URL parameter in the original initialization function is the same as the host name of the designated proxy server:
determining, by the stream redirecting module, whether an accessing mode of the original URL parameter in the original initialization function is http or https;
if not, directly calling, by the stream redirecting module, the original initialization function to request the corresponding video; and
if so, determining, by the stream redirecting module, whether the host name of the original URL parameter in the original initialization function is the same as the host name of the designated proxy server.

6. A video stream redirecting device (1, 21) included in an electronic apparatus (2), for the UIWebView widget of the operating system of the electronic apparatus (2), comprising:
a function construction module (11), configured to construct a new initialization function, hookInitWithURL, of a video URL, wherein new URL parameters and a returned value of the new initialization function of the video URL are the same as original URL parameters and a returned value of the original initialization function, InitWithURL, of the video URL, and the new URL parameters and the original URL parameters both comprise accessing mode, host name and path;
a stream redirecting module (12) configured to hijack the original initialization function, such that when the operating system calls the original initialization function to request a corresponding video, the new initialization function of the video URL is executed to change a target address in the video URL to an address of a designated proxy server (3) to redirect the video stream request of the corresponding video to the designated proxy server and to obtain, by the electronic apparatus (2), the corresponding video from the designated proxy server.

7. The video stream redirecting device (1, 21) according to claim 6, wherein the stream redirecting module being configured to hijack the original initialization function includes:
being configured to exchange actual code addresses of the new initialization function of the video URL and the original initialization function, such that when the operating system calls the original initialization function to request a corresponding video, the new initialization function of the video URL is executed.

8. The video stream redirecting device according to claim 6 or 7, wherein the new initialization function of the video URL includes an AVUrlAsset class initialization function.

9. The video stream redirecting device according to claim 6, wherein the stream redirecting module is specifically configured to:
determine whether a host name of an original URL parameter in the original initialization function is the same as the host name of the designated proxy server;
if so, directly call the original initialization function to request the corresponding video; and
if not, change the host name of the URL parameter to the host name of the designated proxy server, extract the host name and a path of the original URL parameter as a path of the new URL parameter, and then call the original initialization function to request the corresponding video, to redirect the video stream request to the designated proxy server.

10. The video stream redirecting device according to claim 9, wherein the stream redirecting module is further configured to, before determining whether the host name of the original URL parameter in the original initialization function is the same as the host name of the designated proxy server:
determine whether an accessing mode of the original URL parameter in the original initialization function is http or https;
if not, then directly call the original initialization function to request the corresponding video; and
if so, then determine whether the host name of the original URL parameter in the original initialization function is the same as the host name of the designated proxy server.

11. The electronic apparatus (2) according to any one of claims 6-10, wherein the operating system of the electronic apparatus is an iOS system, and the electronic apparatus is configured to perform stream redirecting on a received video request.

## Patentansprüche

1. Videostrom-Umleitungsverfahren für das UIWebView-Widget des Betriebssystems eines elektronischen Geräts (2), umfassend:
Herstellen einer neuen Initialisierungsfunktion, hooklnitWithURL, einer Video-URL durch ein Funktionsherstellungsmodul (11), wobei neue URL-Parameter und ein zurückgegebener Wert der neuen Initialisierungsfunktion der Video-URL die gleichen sind wie ursprüngliche URL-Parameter und ein zurückgegebener Wert einer ursprünglichen Initialisierungsfunktion, InitWithURL, der Video-URL, und sowohl die neuen URL-Parameter als auch die ursprünglichen URL-Parameter Zugriffsmodus, Hostname und Pfad umfassen; und
Hijacking der ursprünglichen Initialisierungsfunktion durch ein Stromumleitungsmodul (12), sodass, wenn das Betriebssystem die ursprüngliche Initialisierungsfunktion aufruft, um ein entsprechendes Video anzufordern, die neue Initialisierungsfunktion der Video-URL ausgeführt wird, Ändern einer Zieladresse in der Video-URL in eine Adresse eines designierten Proxy-Servers (3), um die Videostromanforderung des entsprechenden Videos zu dem designierten Proxy-Server umzuleiten, und Erhalten des entsprechenden Videos von dem designierten Proxy-Server durch das elektronische Gerät (2).

2. Videostrom-Umleitungsverfahren nach Anspruch 1, wobei das Hijacking der ursprünglichen Initialisierungsfunktion durch das Stromumleitungsmodul beinhaltet:
Austauschen aktueller Codeadressen der neuen Initialisierungsfunktion der Video-URL und der ursprünglichen Initialisierungsfunktion durch das Stromumleitungsmodul, sodass, wenn das Betriebssystem die ursprüngliche Initialisierungsfunktion aufruft, um das entsprechende Video anzufordern, die neue Initialisierungsfunktion des Video-URL ausgeführt wird.

3. Videostrom-Umleitungsverfahren nach Anspruch 1 oder 2, wobei die neue Initialisierungsfunktion der Video-URL eine AVUrlAsset-Klasseninitialisierungsfunktion beinhaltet.

4. Videostrom-Umleitungsverfahren nach Anspruch 1, wobei das Ausführen der neuen Initialisierungsfunktion der Video-URL, um die Videostromanforderung an den designierten Proxy-Server umzuleiten, beinhaltet:
Ermitteln, durch das Stromumleitungsmodul, ob ein Hostname eines ursprünglichen URL-Parameters in der ursprünglichen Initialisierungsfunktion der gleiche ist wie der Hostname des designierten Proxy-Servers;
wenn ja, direktes Aufrufen der ursprünglichen Initialisierungsfunktion durch das Stromumleitungsmodul, um das entsprechende Video anzufordern, um die Videostromanforderung zu dem designierten Proxy-Server umzuleiten; und
wenn nicht, Ändern des Hostnamens des URL-Parameters in den Hostnamen des designierten Proxy-Servers durch das Stromumleitungsmodul, Extrahieren des Hostnamens und eines Pfades des ursprünglichen URL-Parameters als Pfad des neuen URL-Parameters und dann Aufrufen der ursprünglichen Initialisierungsfunktion, um das entsprechende Video anzufordern, um die Videostromanforderung zu dem designierten Proxy-Server umzuleiten.

5. Videostrom-Umleitungsverfahren nach Anspruch 4, ferner umfassend, vor dem Ermitteln, ob der Hostname des ursprünglichen URL-Parameters in der ursprünglichen Initialisierungsfunktion der gleiche ist wie der Hostname des designierten Proxy-Servers;
Ermitteln, durch das Stromumleitungsmodul, ob ein Zugriffsmodus des ursprünglichen URL-Parameters in der ursprünglichen Initialisierungsfunktion http oder https ist; wenn nicht, direktes Aufrufen der ursprünglichen Initialisierungsfunktion durch das Stromumleitungsmodul, um das entsprechende Video anzufordern; und
wenn ja, Ermitteln, durch das Stromumleitungsmodul, ob der Hostname des ursprünglichen URL-Parameters in der ursprünglichen Initialisierungsfunktion der gleiche ist wie der Hostname des designierten Proxy-Servers.

6. Videostrom-Umleitungsvorrichtung (1, 21), die in einem elektronischen Gerät (2) beinhaltet ist, für das UIWebView-Widget des Betriebssystems des elektronischen Geräts (2), umfassend:
ein Funktionsherstellungsmodul (11), das konfiguriert ist, um eine neue Initialisierungsfunktion, hooklnitWithURL, einer Video-URL herzustellen, wobei neue URL-Parameter und ein zurückgegebener Wert der neuen Initialisierungsfunktion der Video-URL die gleichen sind wie ursprüngliche URL-Parameter und ein zurückgegebener Wert der ursprünglichen Initialisierungsfunktion, InitWithURL, der Video-URL, und sowohl die neuen URL-Parameter als auch die ursprünglichen URL-Parameter Zugriffsmodus, Hostname und Pfad umfassen;
ein Stromumleitungsmodul (12), das konfiguriert ist, um die ursprüngliche Initialisierungsfunktion durch ein Stromumleitungsmodul zu hijacken, sodass, wenn das Betriebssystem die ursprüngliche Initialisierungsfunktion aufruft, um ein entsprechendes Video anzufordern, die neue Initialisierungsfunktion der Video-URL ausgeführt wird, eine Zieladresse in der Video-URL in eine Adresse eines designierten Proxy-Servers (3) zu ändern, um die Videostromanforderung des entsprechenden Videos zu dem designierten Proxy-Server umzuleiten, und das entsprechende Video von dem designierten Proxy-Server durch das elektronische Gerät (2) zu erhalten.

7. Videostrom-Umleitungsvorrichtung (1, 21) nach Anspruch 6, wobei das Stromumleitungsmodul, das konfiguriert ist, um die ursprüngliche Initialisierungsfunktion zu hijacken, beinhaltet:
konfiguriert zu sein, um aktuelle Codeadressen der neuen Initialisierungsfunktion der Video-URL und der ursprünglichen Initialisierungsfunktion auszutauschen, sodass, wenn das Betriebssystem die ursprüngliche Initialisierungsfunktion aufruft, um ein entsprechendes Video anzufordern, die neue Initialisierungsfunktion der Video-URL ausgeführt wird.

8. Videostrom-Umleitungsvorrichtung nach Anspruch 6 oder 7, wobei die neue Initialisierungsfunktion der Video-URL eine AVUrlAsset-Klasseninitialisierungsfunktion beinhaltet.

9. Videostrom-Umleitungsvorrichtung nach Anspruch 6, wobei das Stromumleitungsmodul insbesondere konfiguriert ist, um:
zu ermitteln, ob ein Hostname eines ursprünglichen URL-Parameters in der ursprünglichen Initialisierungsfunktion der gleiche ist wie der Hostname des designierten Proxy-Servers;
wenn ja, direkt die ursprüngliche Initialisierungsfunktion aufzurufen, um das entsprechende Video anzufordern; und
wenn nicht, den Hostnamen des URL-Parameters in den Hostnamen des designierten Proxy-Servers zu ändern, den Hostnamen und einen Pfad des ursprünglichen URL-Parameters als Pfad des neuen URL-Parameters zu extrahieren und dann die ursprüngliche Initialisierungsfunktion aufzurufen, um das entsprechende Video anzufordern, um die Videostromanforderung an den designierten Proxy-Server umzuleiten.

10. Videostrom-Umleitungsvorrichtung nach Anspruch 9, wobei das Stromumleitungsmodul ferner konfiguriert ist, um vor dem Ermitteln, ob der Hostname des ursprünglichen URL-Parameters in der ursprünglichen Initialisierungsfunktion der gleiche ist wie der Hostname des designierten Proxy-Servers:
zu ermitteln, ob ein Zugriffsmodus des ursprünglichen URL-Parameters in der ursprünglichen Initialisierungsfunktion http oder https ist;
wenn nicht, dann direkt die ursprüngliche Initialisierungsfunktion aufzurufen, um das entsprechende Video anzufordern; und
wenn ja, dann zu ermitteln, ob der Hostname des ursprünglichen URL-Parameters in der ursprünglichen Initialisierungsfunktion der gleiche ist wie der Hostname des designierten Proxy-Servers.

11. Elektronisches Gerät (2) nach einem der Ansprüche 6-10, wobei das Betriebssystem des elektronischen Geräts ein iOS-System ist und das elektronische Gerät konfiguriert ist, um die Stromumleitung nach einer empfangenen Videoanforderung durchzuführen.

## Revendications

1. Procédé de réacheminement de flux vidéo pour le gadget logiciel UIWebView du système d'exploitation d'un appareil électronique (2), comprenant :
construire, par un module de construction de fonction (11), une nouvelle fonction d'initialisation, hookInitWithURL, d'une adresse URL vidéo, de nouveaux paramètres d'adresse URL et une valeur retournée de la nouvelle fonction d'initialisation de l'adresse URL vidéo étant les mêmes que des paramètres d'adresse URL d'origine et une valeur retournée d'une fonction d'initialisation d'origine, InitWithURL, de l'adresse URL vidéo, et à la fois les nouveaux paramètres d'adresse URL et les paramètres d'adresse URL d'origine comprenant un mode d'accès, un nom d'hôte et un chemin ; et
détourner, par un module de réacheminement de flux (12), la fonction d'initialisation d'origine, de telle sorte que, lorsque le système d'exploitation appelle la fonction d'initialisation d'origine pour demander une vidéo correspondante, la nouvelle fonction d'initialisation de l'adresse URL vidéo est exécutée, changer une adresse cible dans l'adresse URL vidéo en une adresse d'un serveur mandataire désigné (3), pour réacheminer la requête de flux vidéo de la vidéo correspondante vers le serveur mandataire désigné, et obtenir, par l'appareil électronique (2), la vidéo correspondante à partir du serveur mandataire désigné.

2. Procédé de réacheminement de flux vidéo selon la revendication 1, dans lequel le détournement, par le module de réacheminement de flux, de la fonction d'initialisation d'origine comprend :
échanger, par le module de réacheminement de flux, des adresses de code réelles de la nouvelle fonction d'initialisation de l'adresse URL vidéo et de la fonction d'initialisation d'origine, de telle sorte que, lorsque le système d'exploitation appelle la fonction d'initialisation d'origine pour demander la vidéo correspondante, la nouvelle fonction d'initialisation de l'adresse URL vidéo est exécutée.

3. Procédé de réacheminement de flux vidéo selon la revendication 1 ou 2, dans lequel la nouvelle fonction d'initialisation de l'adresse URL vidéo comprend une fonction d'initialisation de classe AVUrlAsset.

4. Procédé de réacheminement de flux vidéo selon la revendication 1, dans lequel l'exécution de la nouvelle fonction d'initialisation de l'adresse URL vidéo pour réacheminer la requête de flux vidéo vers le serveur mandataire désigné comprend :
déterminer, par le module de réacheminement de flux, si un nom d'hôte d'un paramètre d'adresse URL d'origine dans la fonction d'initialisation d'origine est ou non le même que le nom d'hôte du serveur mandataire désigné ;
si tel est le cas, appeler directement, par le module de réacheminement de flux, la fonction d'initialisation d'origine pour demander la vidéo correspondante, en vue de réacheminer la requête de flux vidéo vers le serveur mandataire désigné ; et
si tel n'est pas le cas, changer, par le module de réacheminement de flux, le nom d'hôte du paramètre d'adresse URL en le nom d'hôte du serveur mandataire désigné, extraire le nom d'hôte et un chemin du paramètre d'adresse URL d'origine en tant que chemin du nouveau paramètre d'adresse URL, puis appeler la fonction d'initialisation d'origine pour demander la vidéo correspondante, en vue de réacheminer la requête de flux vidéo vers le serveur mandataire désigné.

5. Procédé de réacheminement de flux vidéo selon la revendication 4, comprenant en outre, avant la détermination du point de savoir si le nom d'hôte du paramètre d'adresse URL d'origine dans la fonction d'initialisation d'origine est ou non le même que le nom d'hôte du serveur mandataire désigné :
déterminer, par le module de réacheminement de flux, si un mode d'accès du paramètre d'adresse URL d'origine dans la fonction d'initialisation d'origine est ou non http ou https ;
si tel n'est pas le cas, appeler directement, par le module de réacheminement de flux, la fonction d'initialisation d'origine pour demander la vidéo correspondante ; et
si tel est le cas, déterminer, par le module de réacheminement de flux, si le nom d'hôte du paramètre d'adresse URL d'origine dans la fonction d'initialisation d'origine est ou non le même que le nom d'hôte du serveur mandataire désigné.

6. Dispositif de réacheminement de flux vidéo (1, 21) inclus dans un appareil électronique (2), pour le gadget logiciel UIWebView du système d'exploitation de l'appareil électronique (2), comprenant :
un module de construction de fonction (11), configuré pour construire une nouvelle fonction d'initialisation, hookInitWithURL, d'une adresse URL vidéo, de nouveaux paramètres d'adresse URL et une valeur retournée de la nouvelle fonction d'initialisation de l'adresse URL vidéo étant les mêmes que des paramètres d'adresse URL d'origine et une valeur retournée de la fonction d'initialisation d'origine, InitWithURL, de l'adresse URL vidéo, et à la fois les nouveaux paramètres d'adresse URL et les paramètres d'adresse URL d'origine comprenant un mode d'accès, un nom d'hôte et un chemin ;
un module de réacheminement de flux (12) configuré pour détourner la fonction d'initialisation d'origine, de telle sorte que, lorsque le système d'exploitation appelle la fonction d'initialisation d'origine pour demander une vidéo correspondante, la nouvelle fonction d'initialisation de l'adresse URL vidéo est exécutée pour changer une adresse cible dans l'adresse URL vidéo en une adresse d'un serveur mandataire désigné (3) pour réacheminer la requête de flux vidéo de la vidéo correspondante vers le serveur mandataire désigné, et pour obtenir, par l'appareil électronique (2), la vidéo correspondante à partir du serveur mandataire désigné.

7. Dispositif de réacheminement de flux vidéo (1, 21) selon la revendication 6, dans lequel le module de réacheminement de flux qui est configuré pour détourner la fonction d'initialisation d'origine comprend :
être configuré pour échanger des adresses de code réelles de la nouvelle fonction d'initialisation de l'adresse URL vidéo et de la fonction d'initialisation d'origine, de telle sorte que, lorsque le système d'exploitation appelle la fonction d'initialisation d'origine pour demander une vidéo correspondante, la nouvelle fonction d'initialisation de l'adresse URL vidéo est exécutée.

8. Dispositif de réacheminement de flux vidéo selon la revendication 6 ou 7, dans lequel la nouvelle fonction d'initialisation de l'adresse URL vidéo comprend une fonction d'initialisation de classe AVUrlAsset.

9. Dispositif de réacheminement de flux vidéo selon la revendication 6, dans lequel le module de réacheminement de flux est spécifiquement configuré pour :
déterminer si un nom d'hôte d'un paramètre d'adresse URL d'origine dans la fonction d'initialisation d'origine est ou non le même que le nom d'hôte du serveur mandataire désigné ;
si tel est le cas, appeler directement la fonction d'initialisation d'origine pour demander la vidéo correspondante ; et
si tel n'est pas le cas, changer le nom d'hôte du paramètre d'adresse URL en le nom d'hôte du serveur mandataire désigné, extraire le nom d'hôte et un chemin du paramètre d'adresse URL d'origine en tant que chemin du nouveau paramètre d'adresse URL, puis appeler la fonction d'initialisation d'origine pour demander la vidéo correspondante, en vue de réacheminer la requête de flux vidéo vers le serveur mandataire désigné.

10. Dispositif de réacheminement de flux vidéo selon la revendication 9, dans lequel le module de réacheminement de flux est en outre configuré pour, avant la détermination du point de savoir si le nom d'hôte du paramètre d'adresse URL d'origine dans la fonction d'initialisation d'origine est ou non le même que le nom d'hôte du serveur mandataire désigné :
déterminer si un mode d'accès du paramètre d'adresse URL d'origine dans la fonction d'initialisation d'origine est ou non http ou https ;
si tel n'est pas le cas, alors appeler directement la fonction d'initialisation d'origine pour demander la vidéo correspondante ; et
si tel est le cas, déterminer si le nom d'hôte du paramètre d'adresse URL d'origine dans la fonction d'initialisation d'origine est ou non le même que le nom d'hôte du serveur mandataire désigné.

11. Appareil électronique (2) selon l'une quelconque des revendications 6 à 10, dans lequel le système d'exploitation de l'appareil électronique est un système iOS, et l'appareil électronique est configuré pour réaliser un réacheminement de flux sur une requête de vidéo reçue.
